(19) Europäisches Patentamt / European Patent Office / Office européen des brevets

(11) **EP 2 302 341 B1**

(12) **FASCICULE DE BREVET EUROPEEN**

(45) Date de publication et mention
de la délivrance du brevet:
**07.04.2021 Bulletin 2021/14**

(51) Int Cl.:
*G01J 1/46* *(2006.01)* *H04N 5/359* *(2011.01)*

(21) Numéro de dépôt: **10354047.2**

(22) Date de dépôt: **08.09.2010**

(54) **Circuit de détection avec circuit d'anti-éblouissement amélioré**

Detektionsschaltung mit verbessertem Blendschutz

Detection circuit with improved anti-blooming circuit

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **22.09.2009 FR 0904519**

(43) Date de publication de la demande:
**30.03.2011 Bulletin 2011/13**

(73) Titulaire: **LYNRED**
**91120 Palaiseau (FR)**

(72) Inventeur: **Baud, Laurent**
**38690 Bevenais (FR)**

(74) Mandataire: **Talbot, Alexandre et al**
**Cabinet Hecké**
**28 Cours Jean Jaurès**
**38000 Grenoble (FR)**

(56) Documents cités:
**EP-A1- 0 519 105** **GB-A- 2 117 585**
**JP-A- 2001 211 035** **US-A- 5 606 277**
**US-A1- 2003 034 433**

EP 2 302 341 B1

## Description

## Domaine technique de l'invention

L'invention est relative à un circuit de détection comportant :

- une photodiode connectée à une entrée d'un amplificateur transimpédance,
- un circuit d'anti-éblouissement connecté entre l'entrée et une sortie de l'amplificateur transimpédance.

L'invention est également relative à un procédé de lecture du rayonnement d'un circuit de détection.

## État de la technique

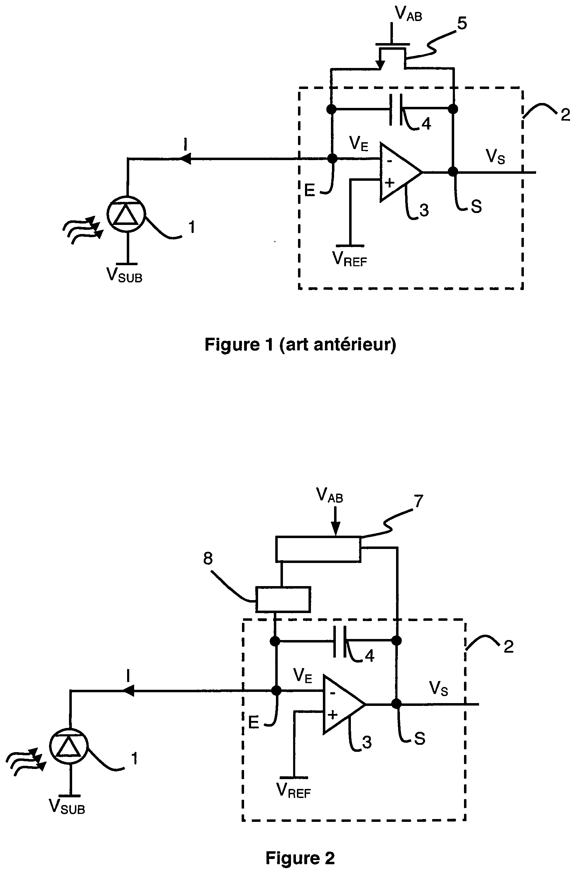

Comme illustré à la figure 1, dans les circuits de détection conventionnels, une photodiode 1, polarisée en inverse, délivre un courant représentatif d'une scène observée. La photodiode 1 délivre ce courant, pendant une durée prédéfinie, à un dispositif intégrateur 2.

Le dispositif intégrateur 2 est constitué par un amplificateur transimpédance capacitif qui comporte un amplificateur 3 connecté à un condensateur 4. La cathode de la photodiode 1 est connectée à une première entrée de l'amplificateur 3 et un potentiel de substrat $V_{Sub}$ est appliqué à l'anode de la photodiode 1. Tant que le potentiel de la première entrée de l'amplificateur 3 est supérieur au potentiel de substrat $V_{Sub}$, la diode est polarisée en inverse et fonctionne de manière attendue.

Le courant émis par la photodiode 1 est alors intégré par le condensateur 4 et l'intégrateur 2 délivre en sortie une tension $V_S$ qui est représentative de l'éclairement de la scène observée par l'intermédiaire du condensateur 4. Cependant, si la photodiode 1 est éclairée par un rayonnement trop intense le courant qui est intégré dans le condensateur 4 devient également important. La différence de potentiels qui existe aux bornes du condensateur 4 vient modifier le potentiel $V_E$ de la première entrée de l'amplificateur 3 et donc la polarisation de la photodiode 1. Dans le cas où le courant délivré par la photodiode 1 est très important, la différence de potentiels aux bornes de la photodiode 1 évolue de sorte que la photodiode devient dépolarisée. Cette dépolarisation entraîne une modification, une augmentation, de la surface de collecte des photons dans les photodiodes adjacentes. Ainsi, quand une photodiode est trop éclairée, il y a un effet d'éblouissement sur les photodiodes adjacentes qui délivrent un courant représentatif d'un éclairement plus important que la réalité.

Dans le document US 2003/0034433, un transistor de type nMOS est connecté entre la première entrée et la sortie de l'amplificateur. Le transistor de type nMOS est connecté, en parallèle, aux bornes du condensateur. Ce transistor a pour but d'éviter la dépolarisation de la photodiode en empêchant que le potentiel $V_E$ de la première entrée de l'amplificateur ne chute plus bas qu'une valeur limite. Une tension d'anti-éblouissement $V_{AB}$ est donc appliquée sur l'électrode de grille pour que le transistor devienne passant avant que la photodiode ne soit dépolarisée. La tension d'anti-éblouissement $V_{AB}$ est choisie de sorte que la photodiode + soit toujours polarisée en inverse, c'est-à-dire qu'elle ne soit pas polarisée en direct. La tension d'anti-éblouissement $V_{AB}$ est définie par rapport au potentiel $V_E$ de la première entrée de l'amplificateur.

Ainsi, au fur et à mesure que la photodiode tire du courant, l'amplificateur fournit ce courant à travers la capacité, tout en maintenant la première entrée de l'amplificateur à la valeur de tension imposée à la seconde entrée. Cette charge du condensateur se traduit par une augmentation de la tension de sortie $V_S$ de l'amplificateur. A partir du moment où la tension de sortie $V_S$ atteint une valeur limite, le potentiel $V_E$, présent à la première entrée de l'amplificateur, diminue. Cette diminution a lieu jusqu'à ce que la différence de potentiel entre l'électrode de grille $V_{AB}$ et la première entrée de l'amplificateur n'atteigne la tension de seuil du transistor. Une fois cette tension de seuil atteinte, le transistor devient passant, les charges supplémentaires sont évacuées et le potentiel $V_E$ de la première entrée de l'amplificateur n'évolue plus. Ainsi, si le potentiel $V_E$ de la première entrée atteint un certain seuil prédéfini, le transistor nMOS devient passant et les charges supplémentaires sont évacuées. Le potentiel $V_E$ de la première entrée ne peut donc plus évoluer au-delà d'un potentiel limite.

Le circuit proposé dans le document US 2003/0034433 répond de manière théorique à la problématique générale du phénomène d'éblouissement, mais ce circuit n'est pas satisfaisant car les contraintes qui pèsent sur une utilisation industrielle de cette architecture sont trop nombreuses et rendent ce circuit inutilisable d'un point de vue industriel.

## Objet de l'invention

L'invention a pour objet un circuit de détection qui corrige les phénomènes d'éblouissement et qui soit facile à mettre en œuvre tout en assurant une réalisation fiable et répétable pour une intégration industrielle.

L'invention a également pour objet un procédé de protection du circuit de détection qui soit facile à mettre en œuvre tout en assurant une réalisation fiable et répétable pour une intégration industrielle.

Le dispositif selon l'invention est défini dans la revendication 1.

Le procédé selon l'invention est défini dans la revendication 7.

## Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

- la figure 1 représente, de manière schématique, un circuit de détection avec un circuit d'anti-éblouissement selon l'art antérieur - la figure 2 représente, de manière générale, un circuit de détection ayant des moyens de comparaison de la tension de sortie de l'amplificateur transimpédance capacitif avec une tension de consigne et ayant également des moyens d'application d'un courant de contre-réaction,
- la figure 3 représente, de manière schématique, un premier mode de réalisation d'un circuit de détection avec un circuit d'anti-éblouissement comportant un amplificateur transimpédance de type résistif, ne faisant pas partie de l'invention, - la figure 4 représente, de manière schématique, un premier mode de réalisation d'un circuit de détection avec un circuit d'anti-éblouissement comportant un amplificateur de type capacitif selon l'invention,
- la figure 5 représente, de manière schématique, un second mode de réalisation d'un circuit de détection avec un circuit d'anti-éblouissement selon l'invention,
- la figure 6 représente, de manière schématique, une variante du premier mode de réalisation d'un circuit de détection avec un circuit d'anti-éblouissement et un circuit de remise à zéro selon l'invention,
- les figures 7A à 7E et 8A à 8E représentent l'évolution de tensions ou de courants pour des éléments caractéristiques d'un circuit selon l'invention, illustré aux figures 3 et 4.

**Description d'un mode de réalisation préférentiel de l'invention**

Dans le circuit de l'art antérieur, illustré à la figure 1, le transistor 5 de type nMOS connecté, en parallèle, aux bornes du condensateur 4 doit éviter qu'un phénomène d'éblouissement n'apparaisse sur les photodiodes adjacentes. Il faut donc que le transistor 5 évite la dépolarisation de la photodiode 1, mais il ne doit pas non plus empêcher le condensateur 4 de stocker un minimum de charges nécessaires au but premier du circuit de détection, définir l'éclairement de la scène observée. Il ressort de ces deux conditions que le potentiel d'anti-éblouissement $V_{AB}$ appliqué à l'électrode de grille du transistor 5 de type nMOS doit être compris dans une gamme précise.

Selon la première condition, le potentiel d'anti-éblouissement $V_{AB}$ appliqué sur l'électrode de grille du transistor 5 de type nMOS doit être inférieur au potentiel de référence $V_{REF}$ appliqué sur la seconde entrée de l'amplificateur 3 auquel s'ajoute la tension de seuil $V_{th}$ du transistor 5. De cette manière, le transistor 5 de type nMOS n'est pas en conduction permanente, car le potentiel $V_E$ de la première entrée de l'amplificateur 3 ne peut être supérieure à $V_{REF}$.

Selon la seconde condition, le potentiel d'anti-éblouissement $V_{AB}$ appliqué sur l'électrode de grille du transistor 5 de type nMOS doit également être supérieur au potentiel du substrat $V_{Sub}$ qui est appliqué sur l'anode de la photodiode 1 auquel sont ajoutées la tension de seuil du transistor $V_{th}$ et la tension minimale $V_{Dmin}$ pour laquelle il y a encore polarisation en inverse de la photodiode 1. Si le potentiel d'anti-éblouissement $V_{AB}$ est inférieur à ce potentiel limite cela veut dire que le potentiel $V_E$ de la première entrée de l'amplificateur 3 est inférieure au potentiel de substrat $V_{Sub}$ auquel est ajouté la tension minimale de polarisation $V_{Dmin}$. De ce fait, la différence de potentiels aux bornes de la photodiode 1 est inférieure à la tension minimale de polarisation $V_{Dmin}$ et il y a donc dépolarisation de la photodiode 1.

Ces contraintes sont représentées par les équations 1 et 2 suivantes :

$$V_{AB} < V_{REF} + V_{th} \qquad (1)$$

$$V_{AB} > V_{Sub} + V_{th} + V_{D\min} \qquad (2)$$

Au regard des conditions classiques d'alimentation d'un circuit de détection, on constate que la gamme de potentiels $V_{AB}$ qui doit être imposée sur l'électrode de grille pour éviter le phénomène d'éblouissement est de l'ordre de 30mV. A titre d'exemple, la tension de référence est égale à 1,1V, le potentiel de substrat $V_{Sub}$ est égal à 1,05V, la tension de seuil $V_{th}$ est de l'ordre de 850mV et la tension minimale de polarisation $V_{Dmin}$ est de l'ordre de 20mV. La tension de seuil doit être comprise entre 1,92 et 1,95V.

La gamme de potentiels autorisés pour la tension d'anti-éblouissement $V_{AB}$ est donc très étroite pour assurer un bon fonctionnement du circuit. Cette gamme de réglage correspond typiquement à la dispersion qui est observée, de manière habituelle, sur la tension de seuil $V_{th}$ des transistors nMOS. A titre d'exemple, la dispersion de la tension de seuil à froid est de l'ordre de 15mV à un sigma.

On constate donc que l'intégration de cette architecture dans un réseau de photodiodes va conduire à la formation de cellules ayant des transistors en conduction permanente (pas de mesure de la scène observée), des cellules pour lesquelles il y aura dépolarisation de la photodiode, donc éblouissement, et des cellules pour lesquelles il y a effectivement un gain sur la maîtrise du phénomène d'éblouissement. Le résultat n'est donc pas satisfaisant.

Le circuit de détection a donc été modifié afin de le rendre plus robuste vis-à-vis des aléas de son procédé de réalisation. Le circuit de détection a cependant conservé une surface réduite et une facilité d'intégration qui sont des éléments nécessaires à son utilisation dans de nombreux domaines d'activité.

Comme illustré aux figures 2 à 6, le circuit de détection comporte une photodiode 1 qui est connectée à un dispositif intégrateur 2. Le dispositif intégrateur 2 comporte un amplificateur transimpédance 3. La photodiode 1 est connectée à une première entrée de l'amplificateur transimpédance 3. Une tension de référence $V_{REF}$ est appliquée sur une seconde entrée de l'amplificateur transimpédance. De manière générale, le circuit de détection comporte une photodiode associée à un circuit de lecture.

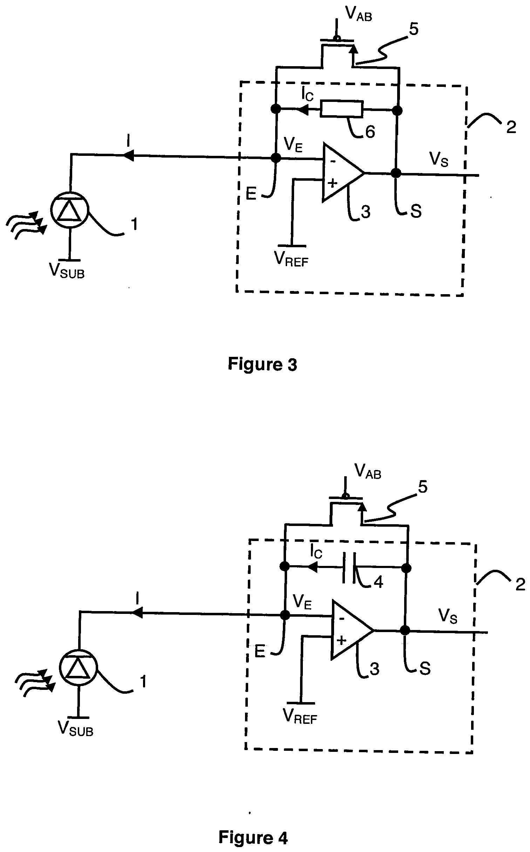

Comme illustré aux figures 3 et 4, l'amplificateur transimpédance utilisé peut être de type résistif (figure 3) ou capacitif (figure 4). La suite de la description traite d'un amplificateur transimpédance capacitif mais un amplificateur transimpédance résistif peut lui être substitué Cependant, les cas où un amplificateur transimpédance résistif est utilisé ne sont pas couverts par les revendications.

L'amplificateur transimpédance résistif illustré à la figure 3 comporte un amplificateur 3, typiquement un amplificateur opérationnel, et une résistance 6. La résistance 6 est connectée entre la première entrée et la sortie de l'amplificateur 3. Un premier nœud électrique E est défini par la connexion de la photodiode 1 avec la résistance 6 et la première entrée de l'amplificateur transimpédance résistif. Un second nœud électrique S est défini par la connexion de la résistance 6 et de la sortie de l'amplificateur transimpédance résistif.

L'amplificateur transimpédance capacitif illustré aux figures 4 à 6 comporte un amplificateur 3, typiquement un amplificateur opérationnel, et un condensateur 4. Le condensateur 4 est connecté entre la première entrée et la sortie de l'amplificateur 3. Un premier nœud électrique E est défini par la connexion de la photodiode 1 avec le condensateur 4 et la première entrée de l'amplificateur transimpédance capacitif. Un second nœud électrique S est défini par la connexion du condensateur 4 et de la sortie de l'amplificateur transimpédance capacitif.

Un potentiel de substrat $V_{Sub}$ est appliqué à une première borne de la photodiode 1 alors que la seconde borne est connectée à la première entrée de l'amplificateur 3. Le potentiel de la seconde borne de la photodiode 1 est donc égal au potentiel de la première entrée de l'amplificateur 3, c'est-à-dire au potentiel $V_E$ du premier nœud électrique E. La photodiode 1 est donc polarisée entre le potentiel de substrat $V_{Sub}$ et le potentiel $V_E$ de la première entrée de l'amplificateur 3. La photodiode 1 est polarisée en inverse pour fournir un courant représentatif de l'éclairement de la scène observée, les potentiels de substrat $V_{Sub}$ et de la première entrée $V_E$ de l'amplificateur 3 sont choisis en conséquence.

Le circuit de lecture comporte également un circuit d'anti-éblouissement et avantageusement un circuit de remise à zéro. Le circuit de remise à zéro et le circuit d'anti-éblouissement sont tous les deux connectés entre la première entrée et la sortie de l'amplificateur transimpédance capacitif. Ils sont donc connectés aux bornes du condensateur 4 et donc aux nœuds électriques E et S.

Comme illustré à la figure 2 de manière générale, le circuit de lecture comporte des moyens 7 de comparaison de la tension de sortie $V_S$ de l'amplificateur transimpédance 3 avec une tension de consigne $V_{AB}$. Il comporte également des moyens 8 d'application d'un courant de contre-réaction sur la première entrée E de l'amplificateur transimpédance lorsque la différence entre la tension de sortie $V_S$ et la tension de consigne $V_{AB}$ atteint un seuil, c'est-à-dire une valeur limite ne pouvant être dépassée. Comme illustré à la figure 2, le circuit de lecture peut comporter une borne de polarisation qui permet de définir la tension de consigne. Cette borne de polarisation est distincte des bornes d'entrée de l'amplificateur.

Dans un mode de réalisation particulièrement avantageux illustré aux figures 3 à 6, le circuit d'anti-éblouissement comporte un transistor 5 à effet de champ connecté entre la première entrée et la sortie de l'amplificateur transimpédance 3, ici un amplificateur transimpédance capacitif. Le transistor 5 est donc connecté, en parallèle, aux bornes du condensateur 4. Le transistor 5 est connecté à l'amplificateur 3 en contre-réaction négative.

Le circuit de remise à zéro peut également comporter un second transistor 9 connecté entre la première entrée et la sortie de l'amplificateur transimpédance capacitif. Le second transistor 9 est donc connecté, en parallèle, aux bornes du condensateur 4. Le second transistor 9 est connecté à l'amplificateur 3 en contre-réaction négative.

Comme illustré aux figures 3 et 4, dans un premier mode de réalisation particulier, le transistor 5 du circuit d'anti-éblouissement, connecté aux bornes du condensateur 4 ou de la résistance 6, est de type pMOS. Le potentiel de substrat $V_{Sub}$ est appliqué à l'anode de la photodiode 1 alors que la cathode est connectée à la première entrée de l'amplificateur transimpédance capacitif. Le transistor 5 est donc connecté par sa borne de drain à la cathode de la photodiode 1, typiquement au niveau de la première entrée de l'amplificateur transimpédance capacitif, c'est-à-dire du nœud E. La photodiode 1 étant polarisée en inverse, le potentiel $V_E$ au nœud E est supérieur au potentiel de substrat $V_{Sub}$.

Dans ce mode de réalisation, le transistor 5 étant de type pMOS, son état passant ou bloqué est défini par rapport à la différence de potentiel qui existe entre l'électrode de grille et la sortie S de l'amplificateur 3. Le potentiel d'anti-éblouissement $V_{AB}$ appliqué sur l'électrode de grille du transistor 5 de type pMOS est défini par rapport à la sortie de l'amplificateur transimpédance capacitif et non plus par rapport à la première entrée comme dans le cas du transistor nMOS de l'art antérieur.

De cette manière, une seule condition est nécessaire pour éviter le phénomène d'éblouissement. Il suffit que le transistor 5 devienne passant lorsque la valeur du potentiel sur la sortie de l'amplificateur 3 atteint une valeur limite, une valeur maximale de sortie $V_{Smax}$. Cette condition est représentée à l'équation 3.

$$V_{AB} < V_{S\max} - V_{th} \quad (3)$$

Le potentiel d'anti-éblouissement sert de tension de consigne par rapport au potentiel de sortie $V_S$ et permet de définir quand le transistor 5 est bloqué ou passant. Le potentiel d'anti-éblouissement $V_{AB}$ appliqué sur l'électrode de grille du transistor 5 de type pMOS est défini indépendamment du potentiel $V_E$ de la première entrée de l'amplificateur 3 pour définir les états bloqués et passant du transistor 5. Le potentiel d'anti-éblouissement $V_{AB}$ est défini uniquement par rapport à la tension de sortie $V_S$ de l'amplificateur 3. Le potentiel $V_{AB}$ appliqué sur l'électrode de grille du transistor 5 doit être inférieur au potentiel maximal $V_{S\max}$ autorisé sur la sortie de l'amplificateur 3 auquel on soustrait la tension de seuil $V_{th}$ du transistor 5. En d'autres termes, le transistor 5 est bloqué tant que la différence entre la tension de consigne et le potentiel de sortie $V_S$ n'a pas atteint la valeur seuil $|V_{AB}-V_{s\max}|$ selon le type du transistor 5 utilisé NMOS ou PMOS.

Dans le circuit de lecture, il y a évolution de la tension de sortie de l'amplificateur 3 au fur et à mesure de la charge du condensateur 4 par la photodiode 1. La tension de sortie $V_S$ évolue jusqu'à atteindre sa valeur de saturation, typiquement de l'ordre de la tension d'alimentation de l'amplificateur 3. Alors que selon l'art antérieur, une fois la tension de saturation atteinte, c'est le potentiel de la première entrée qui évolue à son tour, l'utilisation d'un transistor 5 (comme illustré aux figures 3 à 6) dont le potentiel appliqué sur la grille est défini par apport à la tension de sortie $V_S$ de l'amplificateur transimpédance capacitif permet d'éviter l'évolution du potentiel de la première entrée $V_E$.

Dans la mesure où la tension de sortie évolue entre la tension de référence $V_{REF}$ et la tension de saturation, il suffit de définir une tension de sortie maximale $V_{S\max}$ qui soit comprise entre ces deux tensions, de préférence proche de la tension de saturation. De cette manière, le transistor 5 devient passant quand la tension en sortie est égale à la tension maximale $V_{S\max}$ autorisée c'est-à-dire à une tension proche de la tension de saturation et on évite ainsi la dépolarisation de la photodiode 1 et la saturation de l'amplificateur. Comme le basculement du transistor 5 de l'état bloqué à l'état passant est réalisé par rapport à la tension de sortie, donc par rapport à la différence de potentiels entre les bornes du condensateur 4, il y a toujours des charges accumulées dans le condensateur lorsque le transistor 5 change de l'état bloqué à l'état passant. Plus la tension de sortie maximale $V_{S\max}$ est proche de la tension de saturation et plus la quantité de charges accumulées dans le condensateur 4 avant le basculement est importante. Ainsi, avec une tension de sortie maximale sensiblement égale à la tension de saturation, on profite de la plus grande dynamique possible dans l'utilisation du condensateur 4. Avantageusement, la tension de sortie maximale $V_{S\max}$ est

donc choisie juste en dessous de la tension de saturation de la sortie de manière à profiter pleinement de la dynamique du condensateur 4.

Le passage d'un transistor 5 de l'état bloqué à l'état passant étant défini par rapport à la tension de sortie, la criticité des variations de tension de seuil $V_{th}$ qui sont liées au procédé de fabrication est amoindrie. Il suffit que le transistor 5 bascule dans un état passant, au plus tard, lorsque la tension de sortie $V_S$ atteint la tension de saturation.

Le potentiel d'anti-éblouissement $V_{AB}$ est donc choisi entre le potentiel de référence $V_{REF}$ et le potentiel de sortie maximal $V_{S\max}$. De cette manière, la limite inférieure $V_{REF}$ tient compte des variations sur la tension de seuil $V_{th}$ liée au procédé de réalisation et la limite supérieure $V_{S\max}$ est choisie assez éloignée de la tension de saturation en sortie pour également tenir compte des variations sur la tension de seuil $V_{th}$ liée au procédé de réalisation.

Ainsi, en d'autres termes, selon les modes de réalisation, tant que la différence entre la tension de sortie $V_S$ de l'amplificateur et la tension de consigne $V_{AB}$ est inférieure ou supérieure à un seuil, le transistor 5 est dans un état bloqué. Une fois le seuil atteint, c'est-à-dire quand la tension de sortie atteint $V_{S\max}$, le transistor 5 devient passant.

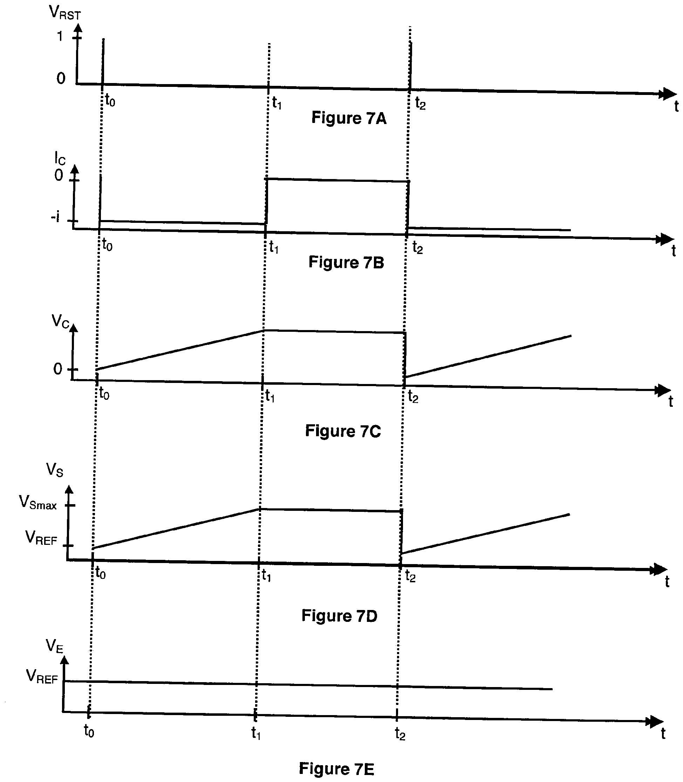

Le fonctionnement du circuit peut être décrit schématiquement de la manière suivante sur les figures 7A à 7E. A un temps $t_0$, le circuit de remise à zéro réalise le court-circuit des bornes du condensateur 4 qui devient donc déchargé. La figure 7A illustre le fonctionnement du circuit de remise à zéro de manière logique. La remise à zéro du condensateur 4 est réalisée au moyen d'une impulsion (durée à l'état haut 1) à une tension de remise à zéro $V_{RST}$. La tension de remise à zéro $V_{RST}$ est appliquée à un second transistor 9 qui est connecté en parallèle aux bornes du condensateur 4 qui devient alors passant. La différence de potentiels $V_C$ aux bornes du condensateur 4 est alors nulle (figure 7C). La photodiode 1 est polarisée en inverse entre la tension de substrat $V_{Sub}$ (appliquée à l'anode sur les figures 2 à 4) et le potentiel $V_E$ de la première entrée de l'amplificateur transimpédance capacitif, typiquement la tension de référence $V_{REF}$ appliquée sur la seconde entrée de l'amplificateur 3.

Au temps $t_0$, le potentiel $V_E$ de la première entrée de l'amplificateur transimpédance capacitif est donc égal au potentiel de référence $V_{REF}$ (figure 7E) et la photodiode 1 est polarisée entre $V_{REF}$ et $V_{Sub}$, c'est-à-dire à la tension $V_{REF}-V_{Sub}$. Le potentiel $V_S$ en sortie de l'amplificateur transimpédance capacitif est égal à $V_{REF}$ (figure 7D). Le potentiel en sortie $V_S$ étant égal au potentiel de référence $V_{REF}$, le transistor 5 du circuit d'anti-éblouissement est bloqué, il ne laisse pas passer de courant. Tout le courant I émis par la photodiode 1 passe par le circuit de remise à zéro. Le courant de charge du condensateur $I_C$ est donc égal à 0.

Entre le temps $t_0$ et le temps $t_1$, la photodiode

1 délivre un courant I représentatif de la scène observée, ici de manière schématique un courant constant. Les charges composant ce courant sont stockées dans le condensateur 4 et entraînent une différence de potentiels $V_C$ aux bornes du condensateur 4. Cette différence de potentiels augmente au fur et à mesure de la charge du condensateur 4. Il en résulte une évolution du potentiel $V_S$ de la sortie de l'amplificateur transimpédance capacitif, la tension de sortie augmente au fur et à mesure de la charge du condensateur 4. Dans son fonctionnement normal, l'amplificateur 3 force le potentiel $V_E$ de la première entrée à être égal au potentiel de la deuxième entrée, ici le potentiel de référence $V_{REF}$. Entre les instants $t_0$ et $t_1$, le potentiel $V_E$ de la première entrée et donc la différence de potentiels aux bornes de la photodiode 1 sont constants. Seule, la tension de sortie $V_S$ évolue. Durant cette période, aucun courant ne passe à travers le transistor 5.

Au temps $t_1$, la tension de sortie $V_S$ atteint la tension maximale de sortie $V_{Smax}$, c'est-à-dire que la différence entre la tension de sortie et la tension de consigne atteint le seuil prédéterminé. Le transistor 5 devient passant et le courant circule maintenant depuis la photodiode 1 à travers le transistor 5. Les charges supplémentaires, envoyées par la photodiode 1, ne sont pas stockées par le condensateur 4. La différence de potentiels aux bornes du condensateur est donc constante à partir de $t_1$. Le courant de la photodiode correspond à la somme du courant passant à travers le transistor 5 et du courant du condensateur 4.

Comme la tension de sortie de l'amplificateur 3 n'atteint pas la tension de saturation (figure 7D), il n'y a pas d'évolution du potentiel $V_E$ de la première entrée de l'amplificateur 3 (figure 7E) et on évite la dépolarisation de la photodiode 1.

Le condensateur 4 est ensuite déchargé à la fin de la période de mesure à l'instant $t_2$, au moyen du circuit de remise à zéro. Le circuit retrouve alors les conditions de l'instant $t_0$.

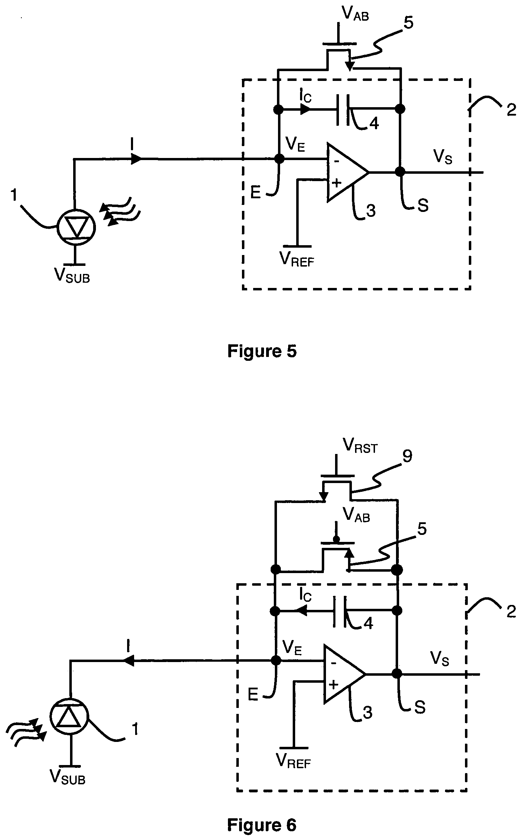

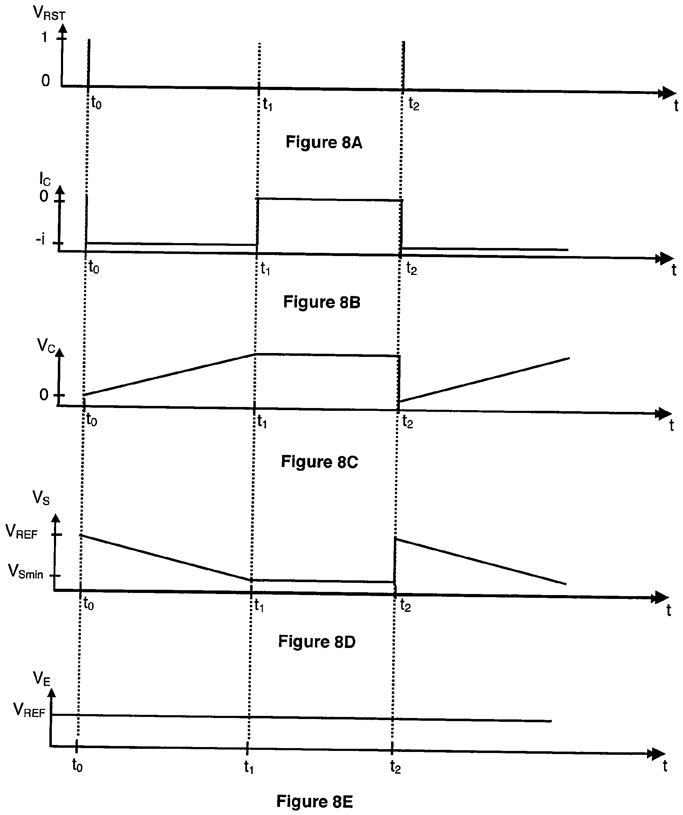

Comme illustré à la figure 5, dans un second mode de réalisation, le transistor 5 du circuit d'anti-éblouissement est un transistor de type nMOS connecté à l'anode de la photodiode 1 par l'intermédiaire de la première entrée de l'amplificateur transimpédance capacitif. Dans ce mode de réalisation particulier, la tension de sortie évolue depuis la tension de référence $V_{REF}$ qui est imposée sur la seconde entrée vers le potentiel de sortie maximal, la tension de référence étant supérieure à la tension seuil. Dans ce mode de réalisation, la tension de sortie diminue avec la charge du condensateur 4. Le principe de fonctionnement est identique au mode de fonctionnement précédent. A titre d'exemple, la tension de référence est égale à 2,2V et la tension de sortie minimale est égale à 0,1 V. Les figures 8A à 8E représentent l'évolution de paramètres électrique du circuit de détection selon le mode de réalisation de la figure 5. Les figures 8A à 8C et 8E sont identiques aux figures 7A à 7C et 7E, seules les tensions de sortie $V_S$ des figures 7D et 8D sont différentes. La tension de sortie évolue entre la tension de référence $V_{REF}$ et le potentiel de sortie maximal $V_{Smin}$.

De manière générale, la photodiode 1 délivre un courant représentatif de la scène observée sur l'entrée E de l'amplificateur transimpédance 3. Ce courant sur l'entrée E se traduit par l'apparition d'une différence de potentiel entre les bornes d'entrée $V_E$ et de sortie $V_S$ de l'amplificateur transimpédance 3 car ces deux bornes sont reliées par un élément passif comme une résistance ou une capacité. La tension de sortie $V_S$ est comparée à une tension de consigne $V_{AB}$ à travers les moyens 7 de comparaison. Lorsque la différence entre la tension de sortie $V_S$ et la tension de consigne $V_{AB}$ (ou l'inverse selon le mode de réalisation) atteint une valeur seuil, un courant de contre-réaction est généré à l'entrée E de l'amplificateur transimpédance 3. Ce courant de contre-réaction empêche l'augmentation de la différence de potentiel entre les bornes d'entrée E et de sortie S de l'amplificateur transimpédance 3.

Dans un cas particulier des modes de réalisation des circuits illustrés aux figures 3 à 5, le circuit d'anti-éblouissement ne comporte qu'un transistor 5 connecté entre la première borne d'entrée E et la borne de sortie S de l'amplificateur 3 et un circuit d'application de la tension d'anti-éblouissement $V_{AB}$ sur la grille du transistor 5 (non représenté). Ce mode de réalisation est avantageux car il est robuste et compact.

Dans un mode de réalisation particulier, illustré à la figure 6, le transistor 5 du circuit d'anti-éblouissement est de type opposé au second transistor 9 du circuit de remise à zéro. Les deux transistors 5 et 9, de types opposés, sont donc, tous les deux, connectés en parallèle aux bornes du condensateur 4. Dans un mode de réalisation particulier, illustré à la figure 6, le transistor 5 du circuit d'anti-éblouissement est de type pMOS et le second transistor 9 du circuit de remise à zéro est de type nMOS, ce mode de réalisation est particulièrement avantageux. Le transistor de type nMOS autorise une remise à zéro plus sure de la différence de potentiels aux bornes du condensateur 4 car la dynamique de tensions nécessaire au maintien du transistor dans un état ouvert est liée au potentiel appliqué sur la première entrée de l'amplificateur transimpédance capacitif qui est constante. Ainsi, on assure une remise à zéro de la différence de potentiel entre les bornes du condensateur 4 quel que soit le niveau de la tension en sortie $V_S$ de l'amplificateur transimpédance capacitif. Il est également possible de changer le type des transistors 5 et 9 dans une variante de réalisation.

Dans un autre mode de réalisation particulier, le transistor 5 du circuit d'anti-éblouissement est du même type que le second transistor 9 du circuit de remise à zéro. Avantageusement, dans ce mode de réalisation, un même transistor est utilisé pour les deux circuits, le second transistor 9 est formé par le transistor 5. Les modes de réalisation illustrés aux figures 3 à 5 peuvent donc représenter un circuit de lecture qui comporte un circuit d'anti-éblouissement et un circuit de remise à zéro matérialisé par le même transistor connecté aux bornes du condensateur 4. Il suffit alors de connecter l'électrode de grille de ce transistor 5 à un circuit d'application de la polarisation de remise à zéro $V_{RST}$ et à un circuit d'application de la polarisation d'anti-éblouissement $V_{AB}$.

Le fait que le circuit d'anti-éblouissement comporte un transistor connecté entre la première entrée et la sortie de l'amplificateur transimpédance capacitif est particulièrement avantageux, cela permet d'obtenir un circuit qui est compact. Par ailleurs, si les circuits d'anti-éblouissement et de remise à zéro partagent le même transistor, il en ressort un très grand gain de place ce qui permet d'augmenter la densité d'intégration. Il est cependant possible d'utiliser des circuits plus complexes dans la mesure où le transistor 5 est connecté en parallèle aux bornes du condensateur.

**Revendications**

1. Circuit de détection comportant :

    - une photodiode (1) délivrant un courant électrique représentatif d'une scène observée,
    - un circuit de lecture muni d'un amplificateur transimpédance capacitif (3, 4) formé par un amplificateur (3) possédant une entrée et une sortie reliées par un condensateur d'intégration (4), l'entrée de l'amplificateur (3) étant reliée à la photodiode (1) de manière à ce que le courant délivré par la photodiode (1) soit stocké dans le condensateur d'intégration (4) et que la tension ($V_S$) en sortie de l'amplificateur (3) évolue en fonction de la tension présente aux bornes du condensateur d'intégration (4),
    - un circuit d'anti-éblouissement (5) connecté entre l'entrée et une sortie de l'amplificateur transimpédance capacitif (3, 4),

    circuit de détection **caractérisé en ce que** le circuit d'anti-éblouissement (5) comporte des moyens de comparaison (5) de la tension en sortie ($V_S$) de l'amplificateur transimpédance capacitif (3, 4) à une tension de consigne ($V_{AB}$), lesdits moyens de comparaison (5) étant connectés à des moyens d'application (5) d'un courant de contre-réaction à l'entrée (E) de l'amplificateur transimpédance capacitif (3, 4) lorsque la différence entre la tension de sortie ($V_S$) de l'amplificateur transimpédance capacitif (3, 4) et la tension de consigne ($V_{AB}$) atteint une valeur limite de manière à figer la tension aux bornes du condensateur d'intégration (4) et la tension de sortie ($V_S$) de l'amplificateur transimpédance capacitif (3, 4).

2. Circuit selon la revendication 1, dans lequel le circuit d'anti-éblouissement (5) comporte :

    - un transistor à effet de champ (5) de type PMOS connecté entre l'entrée et la sortie de l'amplificateur transimpédance capacitif (3, 4) et connecté à une cathode de la photodiode (1),
    - un moyen d'application de la tension de consigne ($V_{AB}$) sur une électrode de commande du transistor (5), ladite tension ($V_{AB}$) étant comprise entre une tension d'alimentation de l'amplificateur (Vdd) et une tension de référence ($V_{REF}$) appliquée à une entrée additionnelle de l'amplificateur transimpédance capacitif (3, 4).

3. Circuit selon la revendication 1, dans lequel le circuit d'anti-éblouissement (5) comporte :

    - un transistor à effet de champ (5) de type NMOS connecté entre l'entrée et la sortie de l'amplificateur transimpédance capacitif (3, 4) et connecté à une anode de la photodiode (1),
    - un moyen d'application de la tension de consigne ($V_{AB}$) sur une électrode de commande du transistor (5), ladite tension ($V_{AB}$) étant comprise entre une tension d'alimentation de l'amplificateur (GND) et une tension de référence ($V_{REF}$) appliquée à une entrée additionnelle de l'amplificateur transimpédance capacitif (3, 4).

4. Circuit selon l'une quelconque des revendications 1 à 3, **caractérisé en ce qu'**il comporte un circuit de remise à zéro comportant un second transistor (9) à effet de champ connecté entre l'entrée et la sortie de l'amplificateur transimpédance capacitif (3 ,4).

5. Circuit selon la revendication 4, **caractérisé en ce que** le second transistor (9) du circuit de remise à zéro est de type opposé au transistor (5) du circuit d'anti-éblouissement.

6. Circuit selon la revendication 4, **caractérisé en ce que** le second transistor (9) du circuit de remise à zéro est du même type que le transistor (5) du circuit d'anti-éblouissement.

7. Procédé de lecture d'un circuit de détection de rayonnement, **caractérisé en ce qu'**il comporte :

    - la génération d'un courant à partir d'une photodiode (1) polarisée en inverse vers une entrée d'un circuit de lecture muni d'un amplificateur transimpédance capacitif (3, 4) muni d'un amplificateur (3) de sorte que le courant délivré par la photodiode (1) soit stocké dans le condensateur d'intégration (4) et que la tension (Vout) en sortie de l'amplificateur (3) évolue en fonction de la tension présente aux bornes du condensateur d'intégration (4), l'amplificateur ayant l'entrée et une sortie reliées par le condensateur d'intégration (4),

- la comparaison de la tension de sortie ($V_S$) de amplificateur transimpédance capacitif (3, 4) à une tension de consigne ($V_{AB}$),

- la génération d'un courant de contre-réaction à l'entrée de l'amplificateur transimpédance capacitif (3, 4) lorsque la différence entre la tension de sortie ($V_S$) de l'amplificateur transimpédance capacitif (3, 4) et la tension de consigne ($V_{AB}$) atteint une valeur seuil de manière à figer la tension aux bornes du condensateur d'intégration (4) et la tension de sortie de l'amplificateur transimpédance capacitif (3, 4).

8. Procédé de lecture selon la revendication 7, **caractérisé en ce que** la génération du courant de contre-réaction provient de la mise à l'état passant d'un transistor (5) reliant l'entrée à la sortie de l'amplificateur (3).


**Patentansprüche**

1. Detektionsschaltung, umfassend:

     - eine Fotodiode (1), die einen elektrischen Strom liefert, der für eine beobachtete Szene repräsentativ ist,
     - eine Leseschaltung, die mit einem kapazitiven Transimpedanz-Verstärker (3, 4) versehen ist, der von einem Verstärker (3) gebildet ist, der einen Eingang und einen Ausgang besitzt, die durch einen Integrationskondensator (4) verbunden sind, wobei der Eingang des Verstärkers (3) mit der Fotodiode (1) verbunden ist, so dass der von der Fotodiode (1) gelieferte Strom in dem Integrationskondensator (4) gespeichert wird, und dass sich die Spannung ($V_S$) am Ausgang des Verstärkers (3) in Abhängigkeit von der an den Klemmen des Integrationskondensators (4) vorhanden Spannung entwickelt,
     - eine Blendschutzschaltung (5), die zwischen dem Eingang und einem Ausgang des kapazitiven Transimpedanz-Verstärkers (3, 4) angeschlossen ist,

wobei die Detektionsschaltung **dadurch gekennzeichnet ist, dass** die Blendschutzschaltung (5) Mittel (5) zum Vergleichen der Spannung am Ausgang ($V_S$) des kapazitiven Transimpedanz-Verstärkers (3, 4) mit einer Sollspannung ($V_{AB}$) umfasst, wobei die Vergleichsmittel (5) an Mittel (5) zum Anlegen eines Gegenreaktionsstroms an den Eingang (E) des kapazitiven Transimpedanz-Verstärkers (3, 4) angeschlossen sind, wenn die Differenz zwischen der Ausgangsspannung ($V_S$) des kapazitiven Transimpedanz-Verstärkers (3, 4) und der Sollspannung ($V_{AB}$) einen Grenzwert erreicht, um die Spannung an den Klemmen des Integrationskondensators (4) und die Ausgangsspannung ($V_S$) des kapazitiven Transimpedanz-Verstärkers (3, 4) einzufrieren.

2. Schaltung nach Anspruch 1, bei der die Blendschutzschaltung (5) umfasst:

     - einen Feldeffekttransistor (5) des Typs PMOS, der zwischen dem Eingang und dem Ausgang des kapazitiven Transimpedanz-Verstärkers (3, 4) angeschlossen und an eine Kathode der Fotodiode (1) angeschlossen ist,
     - ein Mittel zum Anlegen der Sollspannung ($V_{AB}$) an eine Steuerelektrode des Transistors (5), wobei die Spannung ($V_{AB}$) zwischen einer Versorgungsspannung des Verstärkers (Vdd) und einer Referenzspannung ($V_{REF}$), die an einen zusätzlichen Eingang des kapazitiven Transimpedanz-Verstärkers (3, 4) angelegt wird, enthalten ist.

3. Schaltung nach Anspruch 1, bei der die Blendschutzschaltung (5) umfasst:

     - einen Feldeffekttransistor (5) des Typs NMOS, der zwischen dem Eingang und dem Ausgang des kapazitiven Transimpedanz-Verstärkers (3, 4) angeschlossen und an eine Anode der Fotodiode (1) angeschlossen ist,
     - ein Mittel zum Anlegen der Sollspannung ($V_{AB}$) an eine Steuerelektrode des Transistors (5), wobei die Spannung ($V_{AB}$) zwischen einer Versorgungsspannung des Verstärkers (GND) und einer Referenzspannung ($V_{REF}$), die an einen zusätzlichen Eingang des kapazitiven Transimpedanz-Verstärkers (3, 4) angelegt wird, enthalten ist.

4. Schaltung nach einem der Ansprüche 1 bis 3, **dadurch gekennzeichnet, dass** sie eine Rücksetzungsschaltung umfasst, umfassend einen zweiten Feldeffekttransistor (9), der zwischen dem Eingang und dem Ausgang des kapazitiven Transimpedanz-Verstärkers (3, 4) angeschlossen ist.

5. Schaltung nach Anspruch 4, **dadurch gekennzeichnet, dass** der zweite Transistor (9) der Rücksetzungsschaltung vom entgegengesetzten Typ des Transistors (5) der Blendschutzschaltung ist.

6. Schaltung nach Anspruch 4, **dadurch gekennzeichnet, dass** der zweite Transistor (9) der Rücksetzungsschaltung desselben Typs wie der Transistor (5) der Blendschutzschaltung ist.

7. Leseverfahren einer Strahlendetektionsschaltung, **dadurch gekennzeichnet, dass** es umfasst:

     - die Erzeugung eines Stroms von einer invers polarisierten Fotodiode (1) zu einem Eingang einer Leseschaltung, die mit einem kapazitiven Transimpedanz-Verstärker (3, 4) versehen ist, der mit einem Verstärker (3) versehen ist, so dass der von der Fotodiode (1) gelieferte Strom in dem Integrationskondensator (4) gespeichert wird, und dass sich die Spannung (Vout) am Ausgang des Verstärkers (3) in Abhängigkeit von der an den Klemmen des Integrationskondensators (4) vorhandenen Spannung entwickelt, wobei der Eingang und ein Ausgang des Verstärkers durch den Integrationskondensator (4) verbunden sind,
- den Vergleich der Ausgangsspannung ($V_S$) des kapazitiven Transimpedanz-Verstärkers (3, 4) mit einer Sollspannung ($V_{AB}$),
- die Erzeugung eines Gegenreaktionsstroms am Eingang des kapazitiven Transimpedanz-Verstärkers (3, 4), wenn die Differenz zwischen der Ausgangsspannung ($V_S$) des kapazitiven Transimpedanz-Verstärkers (3, 4) und der Sollspannung ($V_{AB}$) einen Grenzwert erreicht, um die Spannung an den Klemmen des Integrationskondensators (4) und die Ausgangsspannung ($V_S$) des kapazitiven Transimpedanz-Verstärkers (3, 4) einzufrieren.

8. Leseverfahren nach Anspruch 7, **dadurch gekennzeichnet, dass** die Erzeugung des Gegenreaktionsstroms vom Leitendschalten eines Transistors (5), der den Eingang mit dem Ausgang des Verstärkers (3) verbindet, stammt.

**Claims**

1. Detection circuit comprising:

   - a photodiode (1) delivering an electric current representative of an observed scene,
   - a readout circuit provided with a capacitive transimpedance amplifier (3, 4) formed by an amplifier (3) having an input and an output connected by an integration capacitor (4), the input of the amplifier (3) being connected to the photodiode (1) in such a way that the current delivered by the photodiode (1) is stored in the integration capacitor (4) and that the voltage ($V_S$) at the output of the amplifier (3) changes as a function of the voltage across the integration capacitor (4),
   - an anti-blooming circuit (5) connected between the input and an output of the capacitive transimpedance amplifier (3, 4),

   detection circuit **characterized in that** the anti-blooming circuit (5) comprises means (5) for comparing the output voltage ($V_S$) of the capacitive transimpedance amplifier (3, 4) with a setpoint voltage ($V_{AB}$), said means (5) for comparing being connected to means (5) for applying a feedback current to the input (E) of the capacitive transimpedance amplifier (3, 4) when the difference between the output voltage ($V_S$) of the capacitive transimpedance amplifier (3, 4) and the setpoint voltage ($V_{AB}$) reaches a limit value so that the voltage across the integration capacitor (4) and the output voltage ($V_S$) of the capacitive transimpedance amplifier (3, 4) are fixed.

2. Circuit according to claim 1, wherein the anti-blooming circuit (5) comprises:

   - a field effect transistor (5) of PMOS type connected between the input and output of the capacitive transimpedance amplifier (3, 4) and connected to a cathode of the photodiode (1),
   - means for applying the setpoint voltage ($V_{AB}$) on a control electrode of the transistor (5), said voltage ($V_{AB}$) being comprised between a supply voltage (Vdd) of the amplifier and a reference voltage ($V_{REF}$) applied to an additional input of the capacitive transimpedance amplifier (3, 4).

3. Circuit according to claim 1, wherein the anti-blooming circuit (5) comprises:

   - a field effect transistor (5) of NMOS type connected between the input and output of the capacitive transimpedance amplifier (3, 4) and connected to an anode of the photodiode (1),
   - means for applying the setpoint voltage ($V_{AB}$) on a control electrode of the transistor (5), said voltage ($V_{AB}$) being comprised between a supply voltage (GND) of the amplifier and a reference voltage ($V_{REF}$) applied to an additional input of the capacitive transimpedance amplifier (3, 4).

4. Circuit according to any one of claims 1 to 3, **characterized in that** it comprises a reset circuit comprising a second field effect transistor (9) connected between the input and output of the transimpedance amplifier (3, 4).

5. Circuit according to claim 4, **characterized in that** the second transistor (9) of the reset circuit is of opposite type to the transistor (5) of the anti-blooming circuit.

6. Circuit according to claim 4, **characterized in that** the second transistor (9) of the reset circuit is of the same type as the transistor (5) of the anti-blooming circuit.

7. Method for reading a radiation detection circuit, **characterized in that** it comprises:

- generation of a current from a reverse-biased photodiode (1) to an input of a readout circuit provided with a capacitive transimpedance amplifier (3, 4) provided with an amplifier (3) so that the current delivered by the photodiode (1) is stored in the integration capacitor (4) and the voltage (Vout) at the output of the amplifier (3) changes as a function of the voltage across the integration capacitor (4), the amplifier (3) having the input and an output connected by the integration capacitor (4),

- comparison of the output voltage ($V_S$) of the capacitive transimpedance amplifier (3, 4) with a setpoint voltage ($V_{AB}$),

- generation of a feedback current at the input of the capacitive transimpedance amplifier (3, 4) when the difference between the output voltage ($V_S$) of the capacitive transimpedance amplifier (3, 4) and the setpoint voltage ($V_{AB}$) reaches a threshold value so as to freeze the voltage across the integration capacitor (4) and the output voltage of the capacitive transimpedance amplifier (3, 4).

8. Method for reading according to claim 7, **characterized in that** generation of the feedback current is effected by turning on a transistor (5) connecting the input to the output of the amplifier (3).

**Figure 1 (art antérieur)**

**Figure 2**

Figure 3

Figure 4

**Figure 5**

**Figure 6**

Figure 7A

Figure 7B

Figure 7C

Figure 7D

Figure 7E

**Figure 8A**

**Figure 8B**

**Figure 8C**

**Figure 8D**

**Figure 8E**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20030034433 A